# EUROPÄISCHE PATENTSCHRIFT

(11) **EP 4 288 793 B1**
(45) Veröffentlichungstag und Bekanntmachung des Hinweises auf die Patenterteilung: **13.08.2025**
(21) Anmeldenummer: 22701950.2
(22) Anmeldetag: 25.01.2022
(51) Int. Cl.: G01S 7/40, G01S 7/497, G01S 13/931, G01S 17/931

(54) **DETEKTIONSVORRICHTUNG ZUR ÜBERWACHUNG WENIGSTENS EINES ÜBERWACHUNGSBEREICHS, FAHRZEUG MIT WENIGSTENS EINER DETEKTIONSVORRICHTUNG UND VERFAHREN ZUM BETREIBEN EINER GEHÄUSE-PRÜFEINRICHTUNG EINER DETEKTIONSVORRICHTUNG**
DETECTION DEVICE FOR MONITORING AT LEAST ONE MONITORING REGION, VEHICLE COMPRISING AT LEAST ONE DETECTION DEVICE, AND METHOD FOR OPERATING A HOUSING TESTING DEVICE OF A DETECTION DEVICE
DISPOSITIF DE DÉTECTION POUR LA SURVEILLANCE D'AU MOINS UNE RÉGION DE SURVEILLANCE, VÉHICULE COMPRENANT AU MOINS UN DISPOSITIF DE DÉTECTION, ET PROCÉDÉ DE FONCTIONNEMENT D'UN DISPOSITIF DE TEST DE BOÎTIER D'UN DISPOSITIF DE DÉTECTION

(30) Priorität: 02.02.2021 DE 102021102297
(43) Veröffentlichungstag der Anmeldung: 13.12.2023
(73) Patentinhaber: Valeo Schalter und Sensoren GmbH, 74321 Bietigheim-Bissingen (DE)
(72) Erfinder: PARL, Christoph, 74321 Bietigheim-Bissingen (DE); KRAUSE, Jonas, 74321 Bietigheim-Bissingen (DE)
(74) Vertreter: Pothmann, Karsten
(86) Internationale Anmeldenummer: PCT/EP2022/051523
(87) Internationale Veröffentlichungsnummer: WO 2022/167249

(56) Entgegenhaltungen:
- DE-A1- 102018 217 467
- DE-A1- 19 706 612
- JP-A- 2004 334 445

## Beschreibung

### Technisches Gebiet

Die Erfindung betrifft eine Detektionsvorrichtung zur Überwachung wenigstens eines Überwachungsbereichs mittels Detektionssignalen, mit wenigstens einem Gehäuse, in dem wenigstens eine Detektions-Sendeeinrichtung zum Senden von Detektionssignalen angeordnet ist,
wobei das wenigstens eine Gehäuse wenigstens einen Transmissions-Gehäuseabschnitt aufweist zur Transmission von Detektionssignalen,
wobei die Detektionsvorrichtung wenigstens eine Gehäuse-Prüfeinrichtung aufweist, mit welcher ein Funktionszustand wenigstens eines Gehäuseabschnitts des wenigstens einen Gehäuses prüfbar ist und bei Erkennen eines von einem Referenz-Funktionszustand des Gehäuseabschnitts abweichenden Ist-Funktionszustand wenigstens ein Zustandssignal erzeugbar ist.

Ferner betrifft die Erfindung ein Fahrzeug mit wenigstens einer Detektionsvorrichtung zur Überwachung wenigstens eines Überwachungsbereichs mittels Detektionssignalen, wobei die wenigstens eine Detektionsvorrichtung wenigstens eine Gehäuse aufweist, in dem wenigstens eine Detektions-Sendeeinrichtung zum Senden von Detektionssignalen angeordnet ist,
wobei das wenigstens eine Gehäuse wenigstens einen Transmissions-Gehäuseabschnitt aufweist zur Transmission von Detektionssignalen,
wobei die wenigstens eine Detektionsvorrichtung wenigstens eine Gehäuse-Prüfeinrichtung aufweist, mit welcher ein Funktionszustand wenigstens eines Gehäuseabschnitts wenigstens eines Gehäuses prüfbar ist und bei Erkennen eines von einem Referenz-Funktionszustands des wenigstens einen Gehäuseabschnitts abweichenden Ist-Funktionszustand wenigstens ein Zustandssignal erzeugbar ist.

Außerdem betrifft die Erfindung ein Verfahren zum Betreiben einer Gehäuse-Prüfeinrichtung einer Detektionsvorrichtung, welche zur Überwachung wenigstens eines Überwachungsbereichs mittels Detektionssignalen vorgesehen ist, bei dem mittels wenigstens einer Gehäuse-Prüfeinrichtung der Detektionsvorrichtung ein Funktionszustand wenigstens eines Gehäuseabschnitts wenigstens eines Gehäuses der Detektionsvorrichtung geprüft wird und bei Erkennen eines von einem Referenz-Funktionszustand des Gehäuseabschnitts abweichenden Ist-Funktionszustand wenigstens ein Zustandssignal erzeugt wird.

### Stand der Technik

Aus der DE 10 2017 109 138 A1 ist eine optische Erfassungseinrichtung für ein Kraftfahrzeug bekannt, mit einem Gehäuse der optischen Erfassungseinrichtung, in welchem eine Lichtquelleneinheit der optischen Erfassungseinrichtung angeordnet ist, wobei mittels der Lichtquelleneinheit Lichtstrahlen durch ein Gehäuseteil des Gehäuses in eine Umgebung des Kraftfahrzeugs aussendbar sind, wobei die optische Erfassungseinrichtung eine Überprüfungseinheit aufweist, mittels welcher ein Funktionszustand des Gehäuses prüfbar ist, und bei einem Erkennen eines von einem Referenz-Funktionszustand des Gehäuses Ist-Funktionszustand des Gehäuses ein Steuersignal erzeugbar ist.

Aus der DE 197 06 612 C2 ist eine optoelektronische Detektionsvorrichtung zur Überwachung eines Überwachungsbereichs bekannt, mit einem ersten Sendeelement, einer Ablenkeinheit, um die vom Sendeelement erzeugten Lichtstrahlen periodisch in einen vorgegebenen Winkelbereich abzulenken, und einem ersten Empfangselement, um die an einem Objekt im Überwachungsbereich reflektieren Lichtstrahlen zu empfangen. Sende- und Empfangselement sind dabei in einem Gehäuse mit einem Austrittsfenster angeordnet, über das die Lichtstrahlen in den Überwachungsbereich ein- und austreten können. Zur Kontrolle eine Verschmutzung des Austrittsfensters werden über ein zweites Sendeelement Testlichtstrahlen so ausgesendet, dass sie das schräg zur Senderichtung verlaufende Austrittsfenster wenigstens einmal durchsetzen und von einem zweiten Empfangselement empfangen werden. Die dort auftreffende Lichtmenge bildet ein Maß für die Verschmutzung des Austrittsfensters.

Die DE 10 2018 217 467 A1 betrifft ebenfalls eine optische Detektionsvorrichtung mit einem primären optoelektronischen Sensor mit einer ersten Sende- und Empfangseinheit, der in einem Gehäuse mit einer transparenten Schutzabdeckung angeordnet ist. Die Vorrichtung umfasst ein Verschmutzungserkennungssystem mit einer zweiten Sendeeinheit, um Licht in die Schutzabdeckung einzukoppeln und einer zweiten Empfangseinheit, um das am Ende eines Propagationspfades ausgekoppeltes Licht zu empfangen und daraus auf eine Verschmutzung der Schutzabdeckung zu schließen. Das Verschmutzungserkennungssystem ist relativ zur Schutzabdeckung beweglich ausgebildet.

Die JP 2004 33445 A offenbart Sicherheitsglas und einen Glasbruchsensor. Der Glasbruchsensor umfasst eine Antenne auf der Glasfläche und mit der Antenne verbundene Kontrolleinrichtung. Bei Senden eines Anforderungssignals von außen, wird ein Antwortsignal gesendet. Falls die Antenne infolge eines Glasbruchs abgetrennt ist, unterbleibt das Empfangen und Senden der Signale.

Der Erfindung liegt die Aufgabe zugrunde, eine Detektionsvorrichtung, ein Fahrzeug und ein Verfahren der eingangs genannten Art zu gestalten, bei denen ein Funktionszustand eines Gehäuses der Detektionsvorrichtung einfacher und/oder zuverlässiger ermittelt werden kann.

### Offenbarung der Erfindung

Diese Aufgabe wird erfindungsgemäß bei der Detektionsvorrichtung dadurch gelöst, dass die wenigstens eine Gehäuse-Prüfeinrichtung
wenigstens eine Prüf-Antworteinrichtung aufweist, die an wenigstens einem zu prüfenden Gehäuseabschnitt angeordnet ist,
und wenigstens eine Prüf-Sende- und Empfangseinrichtung aufweist, mit der elektromagnetische Prüfsignale zu der wenigstens einen Prüf-Antworteinrichtung gesendet werden können und elektromagnetische Antwortsignale, welche als Antwort auf elektromagnetische Prüfsignale von der wenigstens einen Prüf-Antworteinrichtung ausgehen, empfangen werden können, und in Ist-Zustandsgrößen umgewandelt werden können, welche einen Ist-Funktionszustand des zu prüfenden wenigstens einen Gehäuseabschnitts charakterisieren, wobei die wenigstens eine Gehäuse-Prüfeinrichtung wenigstens ein Vergleichsmittel
aufweist, mit dem wenigstens eine Ist-Zustandsgröße und wenigstens eine vorgegebene Referenz-Zustandsgröße, welche einen vorgegebenen Referenz-Funktionszustand des wenigstens einen zu prüfenden Gehäuseabschnitts charakterisiert, verglichen werden können und abhängig von dem Ergebnis des Vergleichs wenigstens ein entsprechendes Zustandssignal erzeugt werden kann.

Erfindungsgemäß ist an wenigstens einem zu prüfenden Gehäuseabschnitt wenigstens eine Prüf-Antworteinrichtung angeordnet. Mit wenigstens einer Prüf-Sende- und Empfangseinrichtung werden elektromagnetische Prüfsignale zu der wenigstens einen Prüf-Antworteinrichtung gesendet. Die elektromagnetischen Prüfsignale bewirken in der wenigstens einen Prüf-Antworteinrichtung entsprechende elektromagnetische Antwortsignale. Die Antworteigenschaften der wenigstens einen Prüf-Antworteinrichtung hängt von deren Ist-Zustand ab, sodass die Antwortsignale den Ist-Zustand der wenigstens einen Prüf-Antworteinrichtung charakterisieren. Da die wenigstens eine Prüf-Antworteinrichtung an dem wenigstens ein zu prüfenden Gehäuseabschnitt angeordnet ist, hängt der Ist-Zustand der wenigstens einen Prüf-Antworteinrichtung von dem Ist-Funktionszustand des wenigstens einzubringen Gehäuseabschnitts ab.

Die Antwortsignale werden von der Prüf-Sende- und Empfangseinrichtung empfangen und in entsprechende Ist-Zustandsgrößen umgewandelt. Die Ist-Zustandsgrößen charakterisieren den Ist-Zustand der wenigstens einen Prüf-Antworteinrichtung und damit den Ist-Funktionszustand des zu prüfenden wenigstens einen Gehäuseabschnitts.

Vorteilhafterweise kann die wenigstens eine Prüf-Sende- und Empfangseinrichtung Mittel, insbesondere elektrooptischen Bauteile, aufweisen, mit denen die elektromagnetischen Antwortsignale in elektrische Ist-Zustandsgrößen umgewandelt werden können. Elektrische Ist-Zustandsgrößen können auf elektrischem Wege mithilfe von elektrischen Bauteilen, insbesondere elektrischen Vergleichsmitteln, mit entsprechenden elektrischen Referenz-Zustandsgrößen verglichen werden.

Die Ist-Zustandsgrößen werden mit vorgegebenen Referenz-Zustandsgrößen verglichen und abhängig von der Ergebnis des Vergleichs wird eine entsprechende Ist-Zustandssignal erzeugt. Die Referenz-Zustandsgrößen charakterisieren einen vorgegebenen Referenz-Funktionszustand der wenigstens einen Prüf-Antworteinrichtung und damit des wenigstens einen zu prüfenden Gehäuseabschnitts. Die Referenz-Zustandsgrößen können vorteilhafterweise vorab, insbesondere im Rahmen einer Kalibration, beispielsweise am Ende einer Produktionslinie der Detektionsvorrichtung, ermittelt werden.

Falls ein Funktionszustand des wenigstens einen Gehäuseabschnitts verändert wird, wirkt sich dies auf die Antworteigenschaften der wenigstens einen Prüf-Antworteinrichtung bezüglich der elektromagnetischen Prüfsignale aus. Entsprechend verändern sich die Antwortsignale und damit die Ist-Zustandsgrößen. Die Abweichung der Ist-Zustandsgrößen von den soll Zustandsgrößen wird mit dem wenigstens eine Vergleichsmittel erfasst und das entsprechende Zustandssignal erzeugt oder geändert. Dabei kann ein Warnsignal erzeugt werden, auf das hin Funktionen der Detektionsvorrichtung, insbesondere das Senden von Detektionssignalen, beeinflusst, insbesondere gestoppt, wird.

Ein Funktionszustand des wenigstens einen Gehäuseabschnitts kann insbesondere durch beschädigen desselben oder Fehlen von Teilen desselben verändert werden. Derartige Beschädigungen können insbesondere tiefe Kratzer in einer äußeren Oberfläche, ein Reißen oder Brechen, eine Lochbildung, insbesondere durch Steinschlag oder dergleichen, oder ein vollständiges oder teilweises Fehlen des wenigstens einen zu prüfenden Gehäuseabschnitts sein. Insbesondere beim Einsatz im Außenbereich, insbesondere im Außenbereich eines Fahrzeugs, kann die Detektionsvorrichtung rauen Einsatzbedingungen ausgesetzt sein, sodass ein erhöhtes Risiko für Beschädigungen entsteht.

Derartige Beschädigungen können zu Funktionsbeeinträchtigung des wenigstens einen Gehäuses, insbesondere des zu prüfenden Gehäuseabschnitts, führen. Abhängig von dem Einsatzgebiet der Detektionsvorrichtung können Funktionsbeeinträchtigungen des wenigstens einen Gehäuses, insbesondere des zu prüfenden Gehäuseabschnitts, zu Gesundheitsschädigungen von Personen im Umfeld der Detektionsvorrichtung, zu Beschädigungen von Bauteilen der Detektionsvorrichtung und/oder zur Beschädigung von Bauteilen im Umfeld der Detektionsvorrichtung führen.

Insbesondere kann eine Funktionsbeeinträchtigung des Gehäuses, insbesondere eines Transmissions-Gehäuseabschnitts, dazu führen, dass mit wenigstens einer Detektions-Sendeeinrichtung der Detektionsvorrichtung gesendete elektromagnetische Detektionssignale, insbesondere Laserstrahlen, unkontrolliert in die Umgebung gelangen und so die Augensicherheit von Personen gefährden können. Mithilfe der erfindungsgemäßen Gehäuse-Prüfeinrichtung kann die Augensicherheit der Detektionsvorrichtung erhöht werden.

Die Verwendung von elektromagnetischen Signalen als Prüfsignale und Antwortsignale hat den Vorteil, dass die Prüfung berührungslos durchgeführt werden kann. Ferner sind keine Verbindungen, insbesondere elektrisch leitende Verbindungen, zwischen der wenigstens einen Prüf-Sende- und Empfangseinrichtung und der wenigstens einen Prüf-Antworteinrichtung erforderlich. So kann die Gehäuse-Prüfeinrichtung einfacher realisiert werden.

Vorteilhafterweise kann mit der Erfindung der Funktionszustand wenigstens eines Gehäuses, insbesondere wenigstens eines Gehäuseabschnitts, während des laufenden Betriebs der Detektionsvorrichtung prüft werden. Im Falle einer Veränderung des Funktionszustands insbesondere infolge einer Beschädigung kann die Detektionsvorrichtung innerhalb sehr kurzer Zeit abgeschaltet werden.

Vorteilhafterweise kann auf ein Fehler-Zustandssignal wenigstens einer Gehäuse-Prüfeinrichtung hin eine Spannungsversorgung einer Steuerung der wenigstens einen Detektions-Sendeeinrichtung abgeschaltet oder das Auslösen von Detektionssignalen unterbunden werden.

Vorteilhafterweise kann die Detektionsvorrichtung mittels elektromagnetischer Detektionssignalen, insbesondere Lichtsignalen, wenigstens einen Überwachungsbereich überwachen. Auf diese Weise kann der wenigstens eine Überwachungsbereich berührungslos überwacht werden.

Vorteilhafterweise kann die Detektionsvorrichtung ausgestaltet sein zur Durchführung eines Signal-Laufzeitverfahrens. Derartige Detektionsvorrichtungen können als Time-of-Flight- (TOF), Light-Detection-and-Ranging-Systeme (LiDAR), Laser-Detection-and-Ranging-Systeme (LaDAR) oder dergleichen ausgestaltet und bezeichnet werden.

Vorteilhafterweise kann die Detektionsvorrichtung ausgestaltet sein zur Ermittlung von Informationen über Objekte in einem Überwachungsbereich, insbesondere Entfernungen, Geschwindigkeiten und/oder Richtungen von Objekten relativ zur Detektionsvorrichtung und/oder wenigstens einem Bezugsbereich Detektionsvorrichtungen oder eines die Detektionsvorrichtungen tragenden Trägers, insbesondere eines Fahrzeugs, einer Maschine oder dergleichen.

Vorteilhafterweise kann die Detektionsvorrichtung als sogenanntes Flash-System, insbesondere als Flash-LiDAR, ausgestaltet sein. Dabei können entsprechende Detektionssignale gleichzeitig einen größeren Teil eines Überwachungsbereichs oder den gesamten Überwachungsbereich anstrahlen. Alternativ kann die Detektionsvorrichtung als scannendes System ausgestaltet sein. Dabei kann mit Detektionssignalen ein Überwachungsbereich abgetastet, also abgescannt, werden. Dazu können die Ausbreitungsrichtung der Detektionssignale über den Überwachungsbereich geschwenkt werden.

Vorteilhafterweise kann die Detektionsvorrichtung als laserbasiertes Entfernungsmesssystem ausgestaltet sein. Ein laserbasiertes Entfernungsmesssystem kann als Lichtquelle wenigstens einer Sendeeinrichtung wenigstens einen Laser, insbesondere einen Diodenlaser, aufweisen. Mit dem wenigstens einen Laser können insbesondere gepulste Detektionssignale gesendet werden. Mit dem Laser können Detektionssignale in für das menschliche Auge sichtbaren oder nicht sichtbaren Wellenlängenbereichen emittiert werden. Entsprechend kann wenigstens eine Empfangseinrichtung der Detektionsvorrichtung einen für die Wellenlänge des ausgesendeten Lichtes ausgelegten Detektor, insbesondere einen Punktsensor, Zeilensensor oder Flächensensor, im Besonderen eine (Lawinen)fotodiode, eine Photodiodenzeile, einen CCD-Sensor, einen Active-Pixel-Sensor, insbesondere einen CMOS-Sensor oder dergleichen, aufweisen.

Vorteilhafterweise kann die Erfindung bei Fahrzeugen, insbesondere Kraftfahrzeugen, verwendet werden. Vorteilhafterweise kann die Erfindung bei Landfahrzeugen, insbesondere Personenkraftwagen, Lastkraftwagen, Bussen, Motorrädern oder dergleichen, Luftfahrzeugen, insbesondere Drohnen, und/oder Wasserfahrzeugen verwendet werden. Die Erfindung kann auch bei Fahrzeugen eingesetzt werden, die autonom oder wenigstens teilautonom betrieben werden können. Die Erfindung ist jedoch nicht beschränkt auf Fahrzeuge. Sie kann auch im stationären Betrieb, in der Robotik und/oder bei Maschinen, insbesondere Bau- oder Transportmaschinen, wie Kränen, Baggern oder dergleichen, eingesetzt werden.

Die Detektionsvorrichtung kann vorteilhafterweise mit wenigstens einer elektronischen Steuervorrichtung eines Fahrzeugs oder einer Maschine, insbesondere einem Fahrerassistenzsystem und/oder einer Fahrwerksregelung und/oder einer Fahrer-Informationseinrichtung und/oder einem Parkassistenzsystem und/oder einer Gestenerkennung oder dergleichen, verbunden oder Teil einer solchen sein. Auf diese Weise kann wenigstens ein Teil der Funktionen des Fahrzeugs oder der Maschine autonom oder teilautonom betrieben werden.

Mit der Detektionsvorrichtung können stehende oder bewegte Objekte, insbesondere Fahrzeuge, Personen, Gesten, Bewegungen, Tiere, Pflanzen, Hindernisse, Fahrbahnunebenheiten, insbesondere Schlaglöcher oder Steine, Fahrbahnbegrenzungen, Verkehrszeichen, Freiräume, insbesondere Parklücken, Niederschlag oder dergleichen, erfasst werden.

Erfindungsgemäß weist die wenigstens eine Prüf-Antworteinrichtung wenigstens eine Antennenstruktur auf oder besteht daraus . Auf diese Weise können elektromagnetische Prüfsignale empfangen und entsprechende elektromagnetische Antwortsignale aktiv oder passiv generiert und ausgestrahlt werden.

Bei einer weiteren vorteilhaften Ausführungsform kann wenigstens eine Prüf-Sende- und Empfangseinrichtung und/oder wenigstens eine Prüf-Antworteinrichtung zur Aussendung und/oder zum Empfang von elektromagnetischen Kurzwellen-Signalen ausgestaltet sein. Kurzwellensignale eignen sich insbesondere für kurze und mittlere Reichweiten, wie sie innerhalb eines Gehäuses einer Detektionsvorrichtung vorherrschen. Außerdem erlauben Kurzwellensignale mittlere bis hohe Übertragungsgeschwindigkeiten.

Vorteilhafterweise können die elektromagnetischen Prüfsignale und/oder Elektromagneten Antwortsignale Kurzwellen-Signale sein.

Bei einer weiteren vorteilhaften Ausführungsform können mehrere Prüf-Antworteinrichtungen entlang des wenigstens einen Gehäuseabschnitts verteilt angeordnet sein und/oder wenigstens eine Prüf-Antworteinrichtung kann sich entlang wenigstens eines Teils des wenigstens einen zu prüfenden Gehäuseabschnitts erstrecken. Auf diese Weise können ausgedehnte Bereiche des wenigstens einen zu prüfenden Gehäuseabschnitts erfasst werden. So können Funktionsbeeinträchtigungen, insbesondere Beschädigungen, an unterschiedlichen Stellen des wenigstens zu prüfenden Gehäuseabschnitts erfasst werden.

Vorteilhafterweise können einzelne, insbesondere nicht zusammenhängende, Antennenstrukturen entlang des wenigstens einen Gehäuseabschnitts verteilt angeordnet sein. Die Antennenstrukturen können jeweilige Antwortsignale auf die Prüfsignale generieren.

Vorteilhafterweise können die mehreren Prüf-Antworteinrichtungen so ausgestaltet sein, dass sie individuelle, insbesondere unterscheidbare, Antwortsignale generieren.

Individuelle Antwortsignale haben den Vorteil, dass sie auf Seiten der wenigstens einen Prüf-Sende- und Empfangseinrichtung unterschieden werden können. So können die Antwortsignale den jeweiligen Antennenstrukturen und damit den Stellen des wenigstens einen zu prüfende Gehäuseabschnitts zugeordnet werden.

Vorteilhafterweise kann sich wenigstens ein Teil, insbesondere eine Antennenstruktur, wenigstens einer Prüf-Antworteinrichtung zusammenhängend entlang wenigstens eines Teils des wenigstens einen zu prüfenden Gehäuseabschnitts erstrecken. Auf diese Weise kann ein Aufwand zur Realisierung der wenigstens einen Prüf-Antworteinrichtung verringert werden.

Vorteilhafterweise kann wenigstens eine Antennenstruktur mit elektrisch leitenden Schichten, insbesondere Schichten aus Indiumoxid oder dergleichen, realisiert sein. Schichten können einfach auf Gehäuseabschnitte aufgebracht, insbesondere aufgedampft oder dergleichen, werden. Elektrisch leitende Schichten können insbesondere als Bahnen realisiert werden.

Vorteilhafterweise können mehrere Teile, insbesondere Antennenstrukturen, einer Prüf-Antworteinrichtung oder mehrere Prüf-Antworteinrichtungen zueinander beabstandet entlang des wenigstens einen Gehäuseabschnitts angeordnet sein. Auf diese Weise können Lücken zwischen den Prüf-Antworteinrichtungen oder den Teilen der Prüf-Antworteinrichtung realisiert werden, durch welche bei der Realisierung des wenigstens einen Gehäuseabschnitts als Transmissions-Gehäuseabschnitt, Detektionssignale der Detektions-Sendeeinrichtung und/oder entsprechende in einem Überwachungsbereich reflektierte Detektionssignale für eine Detektions-Empfangseinrichtung, hindurchgelangen können.

Bei einer weiteren vorteilhaften Ausführungsform kann wenigstens eine Prüf-Antworteinrichtung wenigstens ein elektrisches Bauteil aufweisen, mit dem auf elektromagnetische Prüfsignale hin elektromagnetische Antwortsignale generiert werden können. Auf diese Weise können mit der wenigstens einen Prüf-Antworteinrichtung individuelle Antwortsignale generiert werden. Diese individuellen Antwortsignale können aufseiten der wenigstens einen Prüf-Sende- und Empfangseinrichtung einfacher unterschieden werden.

Vorteilhafterweise kann wenigstens ein elektrisches Bauteil mit wenigstens einer Antennenstruktur der wenigstens einen Prüf-Antworteinrichtung verbunden sein. Mit der wenigstens einen Antennenstruktur können die elektromagnetischen Prüfsignale empfangen und elektromagnetische Antwortsignale, welche mit dem wenigstens einen elektrischen Bauteil generiert werden können, ausgestrahlt werden.

Bei einer weiteren vorteilhaften Ausführungsform kann wenigstens ein elektrisches Bauteil ein passives Bauteil sein und/oder wenigstens ein elektrisches Bauteil kann ein aktives Bauteil sein. Passive Bauteile benötigen keine eigene Stromversorgung. Aktive Bauteile weisen eine Stromversorgung auf und ermöglichen eine größere Signalleistung für Antwortsignale.

Vorteilhafterweise kann wenigstens eine Gehäuse-Prüfeinrichtung wenigstens Teile wenigstens eines RFID-Systems (Radio-Frequency-Identification-System) aufweisen oder daraus bestehen. Auf diese Weise können individuelle Prüfsignale und/oder individuelle Antwortsignale verarbeitet werden. Ferner können so marktübliche Bauteile verwendet werden, wodurch ein Aufwand, insbesondere Kostenaufwand, verringert werden kann.

Vorteilhafterweise wenigstens eine Prüf-Antworteinrichtung wenigstens einen RFID-Transponder aufweisen oder daraus bestehen. Auf diese Weise kann ein ohnehin an der Detektionsvorrichtung angeordneter RFID-Transponder, welcher bei der Produktion, der Lagerung und/oder dem Transport zur Identifizierung der Detektionsvorrichtung dient, zusätzlich zur Prüfung des Funktionszustands des wenigstens einen Gehäuseabschnitts verwendet werden. So kann ein Aufwand zur Realisierung der wenigstens einen Gehäuse-Prüfeinrichtung weiter verringert werden.

Bei einer weiteren vorteilhaften Ausführungsform kann wenigstens eine Prüf-Antworteinrichtung wenigstens teilweise in dem wenigstens einen zu prüfenden Gehäuseabschnitt und/oder an einer Oberfläche des wenigstens einen zu prüfenden Gehäuseabschnitts angeordnet sein und/oder wenigstens eine Prüf-Antworteinrichtung kann wenigstens teilweise mit dem wenigstens einen zu prüfenden Gehäuseabschnitt verbunden sein. Auf diese Weise kann erreicht werden, dass sich Beschädigungen des wenigstens einen zu prüfenden Gehäuseabschnitts zuverlässiger auch auf die Antworteigenschaften der Prüf-Antworteinrichtung auswirken.

Vorteilhafterweise kann die wenigstens eine Prüf-Antworteinrichtung wenigstens teilweise in dem wenigstens einen zu prüfenden Gehäuseabschnitt angeordnet sein. Auf diese Weise kann die wenigstens eine Prüf-Antworteinrichtung nach außen weniger auftragen.

Vorteilhafterweise kann die wenigstens eine Prüf-Antworteinrichtung wenigstens teilweise in das Material des wenigstens einen zu prüfenden Gehäuseabschnitts eingebettet sein. Auf diese Weise kann eine stabile Verbindung zwischen den entsprechenden Teilen der wenigstens einen Prüf-Antworteinrichtung und dem wenigstens einzubringen Gehäuseabschnitt realisiert werden.

Alternativ oder zusätzlich kann wenigstens eine Prüf-Antworteinrichtung wenigstens teilweise an einer Oberfläche des wenigstens einen zu prüfenden Gehäuseabschnitt angeordnet sein. Auf diese Weise kann der wenigstens eine Teil der wenigstens einen Prüf-Antworteinrichtung zur Umgebung hin exponiert sein. So können insbesondere mechanische Einflüsse, insbesondere Steinschlag oder dergleichen, welche den Funktionszustand des wenigstens einen zu prüfenden Gehäuseabschnitts verändern können, zuverlässiger auch die Antworteigenschaften der wenigstens eine Prüf-Antworteinrichtung verändern. So kann die Zuverlässigkeit bei der Erkennung von Störungen des Funktionszustands des wenigstens einen zu prüfenden Gehäuseabschnitts verbessert werden.

Vorteilhafterweise kann wenigstens eine Prüf-Antworteinrichtung wenigstens teilweise in dem wenigstens ein zu prüfenden Gehäuseabschnitt und teilweise an der Oberfläche des wenigstens einen zu prüfenden Gehäuseabschnitt angeordnet sein. Dabei kann wenigstens ein Teil der wenigstens einen Prüf-Antworteinrichtung in dem wenigstens ein zu prüfenden Gehäuseabschnitts so angeordnet sein, dass dieser Teil zu wenigstens einer Oberfläche des wenigstens einen zu prüfenden Gehäuseabschnitt hin frei zugänglich ist.

Vorteilhafterweise kann wenigstens ein Teil, insbesondere eine Antennenstruktur, wenigstens einer Prüf-Antworteinrichtung wenigstens teilweise auf der Oberfläche des wenigstens einen zu prüfenden Gehäuseabschnitts angeordnet sein. Dabei kann das Material des wenigstens einen Teils, insbesondere der Antennenstruktur der wenigstens einen Prüf-Antworteinrichtung auf den wenigstens einen zu prüfenden Gehäuseabschnitt aufgedampft oder in diesen eingelassen sein. So können insbesondere schmale elektrische Leiter als Antennenstruktur realisiert werden.

Bei einer weiteren vorteilhaften Ausführungsform kann wenigstens eine Prüf-Sende- und Empfangseinrichtung in dem wenigstens einen Gehäuse angeordnet sein. Auf diese Weise ist die wenigstens eine Prüf-Sende- und Empfangseinrichtung platzsparend und geschützt angeordnet werden.

Vorteilhafterweise kann die wenigstens eine Prüf-Sende- und Empfangseinrichtung an wenigstens einem Träger, insbesondere wenigstens einer Leiterplatte oder dergleichen, angeordnet sein. Auf diese Weise kann die wenigstens eine prüfsende Empfangseinrichtung einfacher in dem Gehäuse befestigt werden.

Vorteilhafterweise kann die wenigstens eine Prüf-Sende- und Empfangseinrichtung an wenigstens einem Träger, insbesondere wenigstens einer Leiterplatte oder dergleichen, angeordnet sein, an dem auch die wenigstens eine Detektions-Sendeeinrichtung und/oder eine entsprechende Detektions-Empfangseinrichtung angeordnet sind. Auf diese Weise kann ein Bauteilaufwand verringert werden. So können ohnehin vorhandene Träger verwendet werden, um zusätzlich die wenigstens eine Prüf-Sende- und Empfangseinrichtung zu halten. Ferner können ohnehin vorhandene Anschlüsse, insbesondere Energieversorgungsanschlüsse, auch für die wenigstens eine Prüf-Sende- und Empfangseinrichtung verwendet werden.

Bei einer weiteren vorteilhaften Ausführungsform kann wenigstens eine Sendefrequenz für elektromagnetische Prüfsignale der wenigstens einen Prüf-Sende- und Empfangseinrichtung und eine Resonanzfrequenz für elektromagnetische Prüfsignale der Prüf-Antworteinrichtung aneinander angepasst sein. Auf diese Weise kann eine Effizienz bei der Realisierung der elektromagnetischen Antwortsignale aus den Prüfsignalen verbessert werden. Insbesondere kann ein Signal-Rausch-Verhältnis bei den Antwortsignal verbessert werden.

Vorteilhafterweise kann die Sendefrequenz der wenigstens einen Prüf-Sende- und Empfangseinrichtung einer Resonanzfrequenz der wenigstens einen Prüf-Antworteinrichtung, insbesondere der Resonanzfrequenz einer Antennenstruktur der wenigstens einen Prüf-Antworteinrichtung, entsprechen. Auf diese Weise kann die Effizienz bei der Realisierung der elektromagnetischen Antwortsignale weiter verbessert werden.

Alternativ oder zusätzlich kann wenigstens eine Sendefrequenz der wenigstens einen Prüf-Sende- und Empfangseinrichtung einem harmonischen Vielfachen der Resonanzfrequenz der wenigstens einen Prüf-Antworteinrichtung entsprechen. So kann eine Frequenz-Bandbreite der verwendeten Sendefrequenzen insgesamt vergrößert werden.

Bei einer weiteren vorteilhaften Ausführungsform kann wenigstens eine Detektions-Sendeeinrichtung zur Aussendung von elektromagnetischen Detektionssignalen ausgestaltet sein
und/oder
können sich die Frequenzbereiche der elektromagnetischen Detektionssignale und der elektromagnetischen Prüfsignale nicht überlappen
   und/oder
kann die Detektionsvorrichtung wenigstens eine Detektions-Empfangseinrichtung aufweisen.

Mit der wenigstens einen Detektions-Sendeeinrichtung können elektromagnetische Detektionssignale gesendet werden. Mit elektromagnetischen Detektionssignalen können Objekte berührungslos erfasst werden. An Objekten reflektierte elektromagnetische Detektionssignale können mit wenigstens einer Detektions-Empfangseinrichtung empfangen werden.

Vorteilhafterweise können die elektromagnetischen Detektionssignale Lichtsignale, insbesondere Lasersignale, aufweisen oder daraus bestehen. Lichtsignale können technisch einfach realisiert und empfangen werden.

Vorteilhafterweise können sich die Frequenzbereiche der elektromagnetischen Detektionssignale und der elektromagnetischen Prüfsignale nicht überlappen. Auf diese Weise können Störungen durch Überlappungen bei Messungen mit der Detektionsvorrichtung und bei der Prüfung des Funktionszustands des Gehäuses, insbesondere des zu prüfenden Gehäuseabschnitts, vermieden werden.

Vorteilhafterweise kann die Detektionsvorrichtung wenigstens eine Auswerteeinrichtung aufweisen. Mit einer Auswerteeinrichtung können aus den reflektierten elektromagnetischen Detektionssignalen und den gesendeten Detektionssignalen Informationen über den Überwachungsbereich, insbesondere Entfernungen, Geschwindigkeiten und/oder Richtungen von Objekten relativ zur Detektionsvorrichtung, ermittelt werden.

Bei einer weiteren vorteilhaften Ausführungsform kann wenigstens eine Prüf-Antworteinrichtung an wenigstens einem Transmissions-Gehäuseabschnitt angeordnet sein. Auf diese Weise kann der Zustand des Transmissions-Gehäuseabschnitts geprüft werden.

Insbesondere bei der Verwendung elektromagnetischen Detektionssignalen in Form von Licht kann so verhindert werden, dass Licht unkontrolliert, insbesondere durch einen beschädigten Transmissions-Gehäuseabschnitt, in die Umgebung gelangen kann. Unkontrolliert austretendes Licht kann zu Gesundheitsschädigungen bei Personen, insbesondere zu Schädigungen von Augen, führen. Mittels der Gehäuse-Prüfeinrichtung kann der Funktionszustand des wenigstens einen Transmissions-Gehäuseabschnitts geprüft werden. Bei erkennen einer Veränderung des Funktionszustands, welche auf eine Beschädigung des Transmissions-Gehäuseabschnitts hindeuten kann, kann die Detektionsvorrichtung, insbesondere die wenigstens eine Detektions-Sendeeinrichtung, entsprechend angesteuert, insbesondere abgeschaltet, werden. So kann die Augensicherheit der Detektionsvorrichtung insgesamt erhöht werden.

Ferner wird die Aufgabe erfindungsgemäß bei dem Fahrzeug dadurch gelöst, dass die wenigstens eine Gehäuse-Prüfeinrichtung
wenigstens eine Prüf-Antworteinrichtung aufweist, die an wenigstens einem zu prüfenden Gehäuseabschnitt angeordnet ist,
und wenigstens eine Prüf-Sende- und Empfangseinrichtung aufweist, mit der elektromagnetische Prüfsignale zu der wenigstens einen Prüf-Antworteinrichtung gesendet werden können und elektromagnetische Antwortsignale, welche als Antwort auf elektromagnetische Prüfsignale von der wenigstens einen Prüf-Antworteinrichtung ausgehen, empfangen werden können, und in Ist-Zustandsgrößen umgewandelt werden können, welche einen Ist-Funktionszustand des zu prüfenden wenigstens einen Gehäuseabschnitts charakterisieren,
wobei die wenigstens eine Gehäuse-Prüfeinrichtung wenigstens ein Vergleichsmittel aufweist, mit dem wenigstens eine Ist-Zustandsgröße und wenigstens eine vorgegebene Referenz-Zustandsgröße, welche einen vorgegebenen Referenz-Funktionszustand des wenigstens einen zu prüfenden Gehäuseabschnitts charakterisiert, verglichen werden können und abhängig von dem Ergebnis des Vergleichs wenigstens ein entsprechendes Zustandssignal erzeugt werden kann.

Vorteilhafterweise kann das Fahrzeug wenigstens ein Fahrassistenzsystem aufweisen. Mit einem Fahrerassistenzsystem kann das Fahrzeug autonom oder wenigstens teilweise autonom betrieben werden.

Vorteilhafterweise kann wenigstens eine Detektionsvorrichtungen mit wenigstens einem Fahrerassistenzsystem verbunden sein. Auf diese Weise können Informationen, welche mit der wenigstens einen Detektionsvorrichtung ermittelt werden, an das wenigstens eine Fahrerassistenzsystem übermittelt werden. Die Informationen der wenigstens eine Detektionsvorrichtung kann mit dem wenigstens ein Fahrerassistenzsystem zum wenigstens teilweise autonomen Betrieb des Fahrzeugs verwendet werden.

Außerdem wird die Aufgabe erfindungsgemäß bei dem Verfahren dadurch gelöst, dass mit wenigstens einer Prüf-Sende- und Empfangseinrichtung elektromagnetische Prüfsignale zu wenigstens einer Prüf-Antworteinrichtung, die an wenigstens einem zu prüfenden Gehäuseabschnitt angeordnet ist, gesendet werden,
mit der wenigstens einen Prüf-Antworteinrichtung elektromagnetische Antwortsignale als Antwort auf elektromagnetische Prüfsignale ausgegeben werden,
mit der wenigstens einen Prüf-Sende- und Empfangseinrichtung elektromagnetische Antwortsignale empfangen werden und in Ist-Zustandsgrößen umgewandelt werden, welche einen Ist-Funktionszustand des zu prüfenden wenigstens einen Gehäuseabschnitts charakterisieren,
mit wenigstens einem Vergleichsmittel wenigstens eine Ist-Zustandsgröße und wenigstens eine vorgegebene Referenz-Zustandsgröße, welche einen vorgegebenen Referenz-Funktionszustand wenigstens ein zu prüfenden Gehäuseabschnitts charakterisiert, verglichen wird und abhängig von dem Ergebnis des Vergleichs wenigstens ein entsprechendes Zustandssignal erzeugt wird.

Erfindungsgemäß werden elektromagnetische Prüfsignale auf Prüf-Antworteinrichtungen gesendet, welche direkt mit dem zu prüfenden Gehäuseabschnitt verbunden sind. Abhängig vom Zustand der Prüf-Antworteinrichtungen, werden mit diesem entsprechende charakteristische Antwortsignale zurückgesendet. Der Zustand der Prüf-Antworteinrichtungen ist durch die Verbindung mit dem zu prüfenden Gehäuseabschnitt von dem Zustand des Gehäuseabschnitts abhängig. Ist dieser insbesondere durch Beschädigung beeinträchtigt, wirkt sich das auf die Antworteigenschaften der Prüf-Antworteinrichtungen aus. Durch den Vergleich Ist-Zustandsgrößen, welche aus den Antwortsignal gewonnen werden, mit entsprechenden Referenz-Zustandsgrößen kann eine Abweichung des Ist-Funktionszustands des zu prüfenden Gehäuseabschnitts von einem Referenz-Funktionszustand erkannt werden. Daraufhin kann ein entsprechendes Fehler-Zustandssignal erzeugt werden, mit dem die Detektionsvorrichtungen, insbesondere die Detektions-Sendeeinrichtung, entsprechend angesteuert werden kann.

Im Übrigen gelten die im Zusammenhang mit der erfindungsgemäßen Detektionsvorrichtungen, dem erfindungsgemäßen Fahrzeug und dem erfindungsgemäßen Verfahren und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: eine Vorderansicht eines Fahrzeugs mit einem Fahrerassistenzsystem und einem LiDAR-System zu Überwachung eines Überwachungsbereichs in Fahrtrichtung vor dem Fahrzeug;
- Figur 2: einen Schnitt eines LiDAR-Systems, welches in dem Fahrzeug aus Figur 1 verwendet werden kann, mit einer Gehäuse-Prüfeinrichtung gemäß einem ersten Ausführungsbeispiel;
- Figur 3: eine Vorderansicht eines Fensters des LiDAR-Systems aus der Figur 2 mit bahnförmigen Antennenstrukturen der Gehäuse-Prüfeinrichtung;
- Figur 4: eine Vorderansicht eines Fensters eines LiDAR-Systems, mit kreisförmigen Antennenstrukturen einer Gehäuse-Prüfeinrichtung gemäß einem zweiten Ausführungsbeispiel, welche bei dem LiDAR-System aus den Figuren 1 bis 3 eingesetzt werden kann;
- Figur 5: eine Vorderansicht eines Fensters eines LiDAR-Systems, mit RFID-Chips einer Gehäuse-Prüfeinrichtung gemäß am dritten Ausführungsbeispiel, welche bei dem LiDAR-System aus den Figuren 1 bis 3 eingesetzt werden kann.

In den Figuren sind gleiche Bauteile mit gleichen Bezugszeichen versehen.

### Ausführungsform(en) der Erfindung

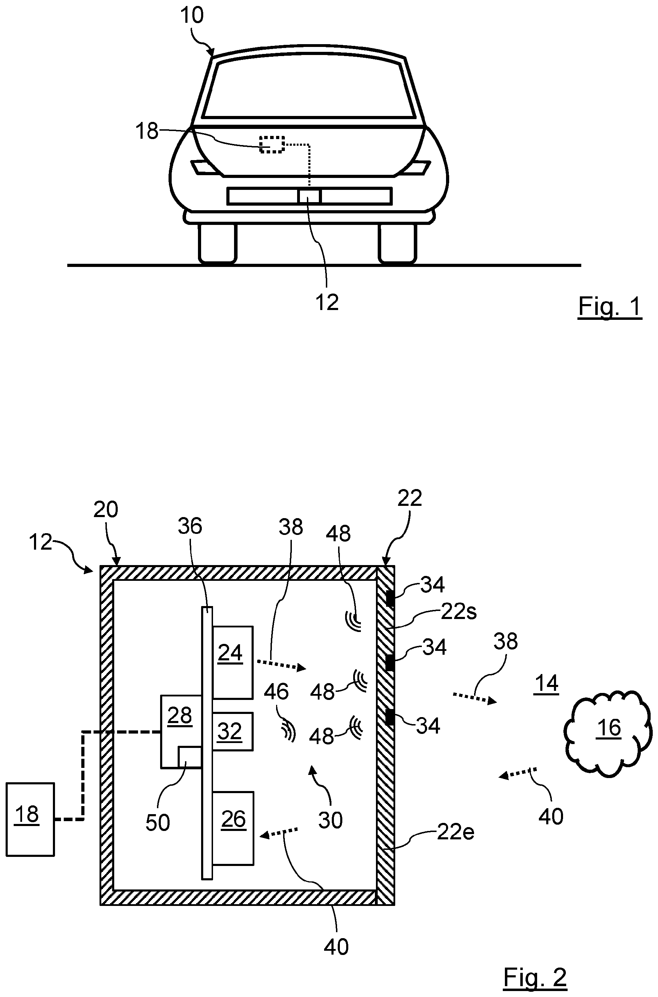

In der Figur 1 ist ein Fahrzeug 10 in Form eines Personenkraftwagens in der Vorderansicht gezeigt. Das Fahrzeug 10 verfügt über eine Detektionsvorrichtung in Form eines LiDAR-Systems 12. Das LiDAR-System 12 ist in der Figur 2 in einem Schnitt gezeigt. Das LiDAR-System 12 befindet sich beispielhaft in der vorderen Stoßstange des Fahrzeugs 10. Mit dem LiDAR-System 12 kann ein Überwachungsbereich 14 beispielhaft in Fahrtrichtung vor dem Fahrzeug 10 auf Objekte 16 hin überwacht werden. Das LiDAR-System 12 kann auch an anderer Stelle und anders ausgerichtet am Fahrzeug 10 angeordnet sein. Das Fahrzeug 10 kann auch mehrere LiDAR-Systeme 12 aufweisen.

Ferner verfügt das Fahrzeug 10 über ein Fahrerassistenzsystem 18. Mit dem Fahrerassistenzsystem 18 kann das Fahrzeug 10 autonom oder teilautonom betrieben werden. Das LiDAR-System 12 ist mit dem Fahrerassistenzsystem 18 verbunden. Auf diese Weise können mit dem LiDAR-System 12 ermittelte Informationen über den Überwachungsbereich 14, beispielsweise Informationen über Objekte 16 im Überwachungsbereich 14 an das Fahrerassistenzsystem 18 übermittelt werden und mit diesem für die Steuerung des Betriebs des Fahrzeugs 10 verwendet werden.

Mit dem LiDAR-System 12 können Objektinformationen, beispielsweise Entfernungen, Richtungen und/oder Geschwindigkeiten von erfassten Objekten 16 relativ zum LiDAR-System 12 oder zu einem Bezugsbereich des Fahrzeugs 10, beispielsweise einer Fahrzeuglängsachse und/oder einer Fahrzeugquerachse des Fahrzeugs 10, ermittelt werden.

Mit dem LiDAR-System 12 können stehende oder bewegte Objekte, beispielsweise Fahrzeuge, Personen, Gesten, Bewegungen, Tiere, Pflanzen, Hindernisse, Fahrbahnunebenheiten, beispielsweise Schlaglöcher oder Steine, Fahrbahnbegrenzungen, Verkehrszeichen, Freiräume, insbesondere Parklücken, Niederschlag oder dergleichen, erfasst werden.

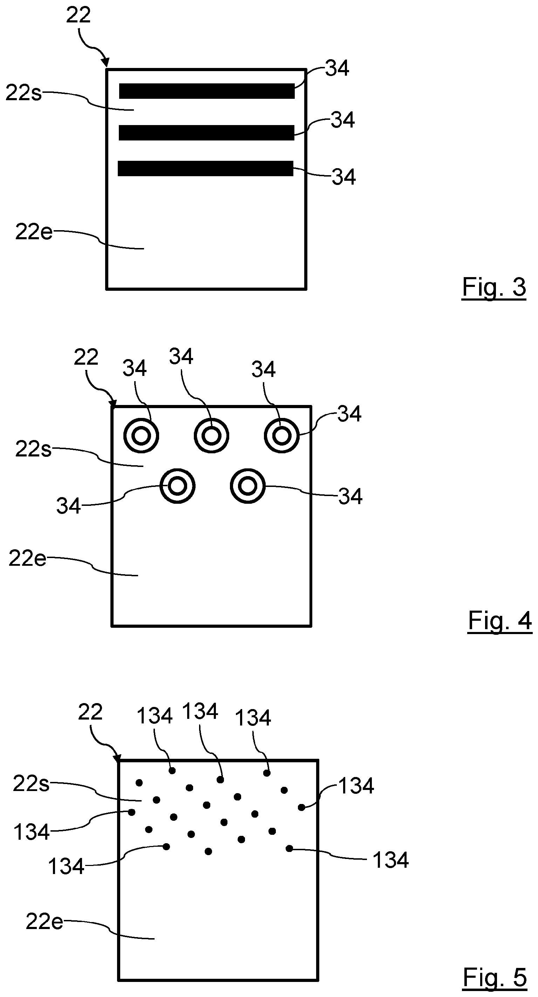

Das LiDAR-System 12 umfasst ein Gehäuse 20. Das Gehäuse 20 weist auf einer Seite, welche dem Überwachungsbereich 14 im Betriebszustand zugewandt wird, einen Transmissions-Gehäuseabschnitt in Form eines Fensters 22 auf. Das Fenster 22 ist in der Figur 3 in der Vorderansicht von dem Überwachungsbereich 14 aus betrachtet gezeigt. Das Fenster 22 umfasst einen Sende-Fensterabschnitt 22s, in den Figuren 2 und 3 oben, und einen Empfangs-Fensterabschnitt 22e, unten.

In dem Gehäuse 20 sind eine Detektions-Sendeeinrichtung 24, eine Detektions-Empfangseinrichtung 26 und eine elektronische Steuer- und Auswerteeinrichtung 28 angeordnet.

Ferner umfasst das LiDAR-System 12 eine Gehäuse-Prüfeinrichtung 30. Mit der Gehäuse-Prüfeinrichtung 30 kann ein Funktionszustand des Fensters 22 geprüft werden. Die Gehäuse-Prüfeinrichtung 30 umfasst eine Prüf-Sende- und Empfangseinrichtung 32 und eine Mehrzahl von Prüf-Antworteinrichtungen gemäß einem ersten Ausführungsbeispiel beispielhaft in Form von Antennenstrukturen 34.

Die Prüf-Sende- und Empfangseinrichtung 32 befindet sich innerhalb des Gehäuses 20. Die Antennenstrukturen 34 sind an der Außenseite des Sende-Fensterabschnitts 22s angeordnet und fest mit diesem verbunden.

Die Detektions-Sendeeinrichtung 24, die Detektions-Empfangseinrichtung 26, die Steuer- und Auswerteeinrichtung 28 und die Prüf-Sende- und Empfangseinrichtung 32 sind beispielhaft an einem gemeinsamen Träger, beispielhaft einer Leiterplatte 36, angeordnet. Die Detektions-Sendeeinrichtung 24, die Detektions-Empfangseinrichtung 26, die Steuer- und Auswerteeinrichtung 28 und die Prüf-Sende- und Empfangseinrichtung 32 können auch an unterschiedlichen Trägern, auch dezentral angeordnet sein.

Mit der Detektions-Sendeeinrichtung 24 werden elektromagnetische Detektionssignale 38 durch den Sende-Fensterabschnitt 22s in den Überwachungsbereich 14 gesendet. Die Detektions-Sendeeinrichtung 24 weist eine Lichtquelle beispielhaft in Form eines Lasers auf. Mit dem Laser können elektromagnetische Detektionssignale 38 in Form von Laserlichtpulsen erzeugt werden. Die Detektions-Sendeeinrichtung 24 kann ferner Lichtbeeinflussungseinrichtungen, beispielsweise optische Linsen, optische Umlenkeinrichtungen oder dergleichen aufweisen, mit denen die Detektionssignale 38 geformt und/oder gelenkt werden können.

Beispielhaft ist das LiDAR-System 12 als sogenanntes Flash-LiDAR-System ausgestaltet. Die Detektionssignale 38 werden dabei als Blitz (Flash) ausgesendet, welcher den Überwachungsbereich 14 gleichzeitig anstrahlt.

Das Fenster 22 ist aus einem Material, welches für die Detektionssignale 38 durchlässig ist. Die Antennenstrukturen 34 sind an dem Fenster 22, respektive dem Sende-Fensterabschnitt 22, so gestaltet, dass diese die Ausbreitung der Detektionssignale 38 in den Überwachungsbereich 14 nicht stören.

Die Detektionssignale 38, welche auf ein Objekt 16 treffen, werden von diesem als elektromagnetische Echo-Detektionssignale 40 reflektiert. Die Echo-Detektionssignale 40, welche in Richtung des LiDAR-Systems 12 reflektiert werden, gelangen durch den Empfangs-Fensterabschnitt 22b zu der Detektions-Empfangseinrichtung 26.

Die Detektions-Empfangseinrichtung 26 umfasst beispielhaft einen Detektor, mit dem die empfangenen Echo-Detektionssignale 40 in elektrische Signale umgewandelt werden können. Ferner kann die Detektions-Empfangseinrichtung 26 optional optische Bauteile umfassen, mit denen die Echo-Detektionssignale 40 beeinflusst, beispielsweise auf den wenigstens einen Detektor fokussiert werden können.

Der Detektor der Detektions-Empfangseinrichtung 26 ist beispielhaft ein für die Wellenlänge des mit der Detektions-Sendeeinrichtung 24 ausgesendeten Lichtes ausgelegte Detektor, insbesondere ein Punktsensor, Zeilensensor oder Flächensensor, im Besonderen eine (Lawinen)fotodiode, eine Photodiodenzeile, Einen CCD-Sensor, Einen Active-Pixel-Sensor, beispielsweise CMOS-Sensor oder dergleichen.

Aus den elektrischen Signalen, welche mit der Detektions-Empfangseinrichtung 26 aus den Echo-Detektionssignalen 40 ermittelt werden, werden beispielsweise nach einem Laufzeitverfahren die Entfernung, die Geschwindigkeit und/oder die Richtung des erfassten Objekts 16 relativ zum LiDAR-System 12 ermittelt.

Die Prüf-Sende- und Empfangseinrichtung 32 der Gehäuse-Prüfeinrichtung 30 ist auf den Sende-Fensterabschnitt 22s gerichtet.

Die Antennenstrukturen 34 sind in die Außenseite des Sende-Fensterabschnitts 22s eingebettet. Beispielhaft sind die Antennenstrukturen 34 auf der Außenseite des Sende-Fensterabschnitts 22s zur Umgebung hin ungeschützt. Daher sind sie äußeren Einflüssen, insbesondere Steinschlägen oder dergleichen, im gleichen Maße ausgesetzt, wie die Außenseite des Sende-Fensterabschnitts 22s. Die Antennenstrukturen 34 sind beispielsweise als schmale elektrische Leiter, beispielsweise als Indiumoxid-Schicht oder dergleichen, in die Oberfläche des Sende-Fensterabschnitts 22s eingelassen. Alternativ können die Antennenstrukturen 34 auf die Oberfläche des Sende-Fensterabschnitts 22s aufgedampft oder in anderer Weise realisiert sein.

In dem in den Figuren 2 und 3 gezeigten Beispiel sind drei Antennenstrukturen 34 in Form von parallelen elektrisch leitenden Bahnen angeordnet, welche sich nahezu über die gesamte Breite des Sende-Fensterabschnitts 22s erstrecken. Die Antennenstrukturen 34 sind senkrecht zu ihrer Erstreckungsrichtung, in den Figuren 2 und 3 von unten nach oben, über den Sende-Fensterabschnitt 22s verteilt.

Mit der Gehäuse-Prüfeinrichtung 30 kann der Funktionszustand des Fensters 22, respektive des Sende-Fensterabschnitts 22s, während des Betriebs des LiDAR-Systems 12 und/oder während Betriebspausen berührungslos geprüft werden.

Zur Prüfung des Funktionszustands des Sende-Fensterabschnitts 22s werden mit der Prüf-Sende- und Empfangseinrichtung 32 elektromagnetische Prüfsignale 46 in Form von Hochfrequenzsignalen ausgesendet. Die Prüfsignale 46 werden in Richtung des Sende-Fensterabschnitts 22s und der Antennenstrukturen 34 gesendet. Mit jeder Antennenstruktur 34 wird als Antwort auf die Prüfsignale 46 ein jeweiliges elektromagnetisches Antwortsignal 48 ebenfalls in Form von Hochfrequenzsignalen erzeugt.

Die Sendefrequenz der Prüf-Sende- und Empfangseinrichtung 32 und die Resonanzfrequenzen der Antennenstrukturen 34 sind so aneinander angepasst, dass mit den Antennenstrukturen 34 mit möglichst hoher Effizienz Antwortsignale 48 erzeugt werden können. Beispielhaft sind die Sendefrequenz der Prüf-Sende- und Empfangseinrichtung 32 und die Resonanzfrequenz der Antennenstrukturen 34 identisch. Alternativ können die Resonanzfrequenzen auch harmonische Vielfache der Sendefrequenz sein.

Die Antwortsignale 48 werden von der Prüf-Sende- und Empfangseinrichtung 32 empfangen. Mit der Prüf-Sende- und Empfangseinrichtung 32 werden die Antwortsignale 48 in Ist-Zustandsgrößen in Form von elektrischen Signalen umgewandelt.

Die Ist-Zustandsgrößen charakterisiert den Ist-Funktionszustand des Sende-Fensterabschnitts 22s. Der Funktionszustand des Sende-Fensterabschnitts 22s kann beispielsweise durch Beschädigungen oder Fehlen von Teilen des Sende-Fensterabschnitts 22s verändert werden. Veränderungen des Funktionszustands des Sende-Fensterabschnitts 22s können beispielsweise tiefe Kratzer in der äußeren Oberfläche, ein Reißen oder Brechen, eine Lochbildung, beispielsweise durch Steinschlag oder dergleichen, oder ein vollständiges oder teilweises Fehlen des Sende-Fensterabschnitts 22s bewirkt werden. Da die Antennenstrukturen 34 direkt an dem Sende-Fensterabschnitt 22s angeordnet und mit diesem verbunden sind, wirken sich Veränderungen des Funktionszustands des Sende-Fensterabschnitts 22s auch auf die Antworteigenschaften der Antennenstrukturen 34 aus. Dadurch verändert sich das Antwortsignal 48 der betroffenen Antennenstrukturen 34 und die jeweilige Ist-Zustandsgröße.

Die Gehäuse-Prüfeinrichtung 30 weist Vergleichsmittel 50. Die Vergleichsmitteln 50 sind beispielhaft in der Steuer- und Auswerteeinrichtung 28 auf softwaremäßigem und/oder hardwaremäßigem Wege realisiert sein.

Mit dem Vergleichsmittel 50 werden die Ist-Zustandsgrößen mit entsprechenden Referenz-Zustandsgrößen verglichen.

Die Referenz-Zustandsgrößen sind beispielsweise in einem Speichermedium vorgegeben. Der Speichermedium kann beispielsweise Teil der Steuer- und Auswerteeinrichtung 28 sein. Die Referenz-Zustandsgrößen charakterisieren einen Referenz-Funktionszustand des Sende-Fensterabschnitts 22s, bei dem dieser uneingeschränkt funktionsfähig ist.

Die Referenz-Zustandsgrößen können beispielsweise bei einer Kalibrierung des LiDAR-Systems 12, beispielsweise am Ende einer Produktionslinie, ermittelt werden. Abweichungen vom Referenzzustand des Sende-Fensterabschnitts 22s, beispielsweise durch Beschädigungen oder durch Fehlen zumindest von Teilen des Sende-Fensterabschnitts 22s können dazu führen, dass Detektionssignale 38 unkontrolliert in die Umgebung gelangen. Unkontrolliert austretende Detektionssignale 38 können beispielsweise zu Gesundheitsschäden, insbesondere Augenschädigungen, bei angestrahlten Personen führen. Um die erforderliche Augensicherheit zu gewährleisten, müssen daher Detektionssignale 38, welche unkontrolliert in die Umgebung gelangen, verhindert werden.

Wird bei dem Vergleich mit dem Vergleichsmittel 22s zwischen den Ist-Zustandsgrößen und den Referenz-Zustandsgrößen eine Abweichung der Ist-Zustandsgrößen beispielsweise außerhalb einer vorgegebenen Toleranz, welche auch Null sein kann, zu den Referenz-Zustandsgrößen ermittelt, so wird mit der Gehäuse-Prüfeinrichtung 30 ein entsprechendes Zustands-Warnsignal ausgegeben. Auf das Zustands-Warnsignal hin wird die Aussendung von weiteren Detektionssignalen 38 gestoppt.

Das Vergleichsmittel 50, das Speichermittel und etwaige weitere elektronische Steuer- und Auswertebauteile der Gehäuse-Prüfeinrichtung 30 können wenigstens teilweise in der Steuer- und Auswerteeinrichtung 28 oder mit separaten Bauteilen realisiert sein.

In der Figur 4 ist ein Fenster 22 mit Antennenstrukturen 34 gemäß einem zweiten Ausführungsbeispiel gezeigt. Diejenigen Elemente, die zu denen des Ausführungsbeispiels aus den Figuren 2 und 3 ähnlich sind, sind mit denselben Bezugszeichen versehen. Das zweite Ausführungsbeispiel unterscheidet sich von dem ersten Ausführungsbeispiel dadurch, dass die Antennenstrukturen 34 in Form von mehreren konzentrischen Kreisanordnungen realisiert sind.

In der Figur 5 ist ein Fenster 22 mit Prüf-Antworteinrichtungen gemäß einem dritten Ausführungsbeispiel gezeigt. Im Unterschied zu dem ersten Ausführungsbeispiel und dem zweiten Ausführungsbeispiel sind anstelle von Antennenstrukturen 34 beim dritten Ausführungsbeispiel Prüf-Antworteinrichtungen in Form von RFID-Chips 134 vorgesehen. Die RFID-Chips 134 sind über den Sende-Fensterabschnitt 22s verteilt in dem Fenster 22 eingebettet.

Jeder RFID-Chip 134 umfasst einen Transponder mit einer Antenne und einem elektrischen Bauteil. Mit der Antenne können die Prüfsignale 46 der Prüf-Sende- und Empfangseinrichtung 32 empfangen werden. Mit dem elektronischen Bauteil können als Antwort auf die Prüfsignale 46 jeweilige Antwortsignale 48 generiert werden. Die Antwortsignale 48 können mit den Antennen der RFID-Chips 134 ausgesendet werden. Auf diese Weise kann mit jedem RFID-Chip 134 ein individuelles Antwortsignal 48 erzeugt werden. Auf Seiten der Prüf-Sende- und Empfangseinrichtung 32 kann jedes Antwortsignal 48 dem entsprechenden RFID-Chips 134 und damit der entsprechenden Stelle des Sende-Fensterabschnitts 22s zugeordnet werden, in dem sich dieser RFID-Chips 134 befindet. Bei Abweichungen der jeweiligen Ist-Zustandsgrößen von den Referenz-Zustandsgrößen kann so die Stelle des Sende-Fensterabschnitts 22s identifiziert werden, an der der Funktionszustand beispielsweise durch Beschädigung oder teilweises Fehlen des Fensterabschnitts 22s verändert und damit beeinträchtigt ist.

## Patentansprüche

1. Detektionsvorrichtung (12) zur Überwachung wenigstens eines Überwachungsbereichs (14) mittels Detektionssignalen (38, 40), mit wenigstens einem Gehäuse (20), in dem wenigstens eine Detektions-Sendeeinrichtung (24) zum Senden von Detektionssignalen (38, 40) angeordnet ist,
wobei das wenigstens eine Gehäuse (20) wenigstens einen Transmissions-Gehäuseabschnitt (22) aufweist zur Transmission von Detektionssignalen (38, 40),
wobei die Detektionsvorrichtung (12) wenigstens eine Gehäuse-Prüfeinrichtung (30) aufweist, mit welcher ein Funktionszustand wenigstens eines Gehäuseabschnitts (22) des wenigstens einen Gehäuses (20) prüfbar ist und bei Erkennen eines von einem Referenz-Funktionszustand des Gehäuseabschnitts (22) abweichenden Ist-Funktionszustand wenigstens ein Zustandssignal erzeugbar ist,
wobei die wenigstens eine Gehäuse-Prüfeinrichtung (30)
wenigstens eine Prüf-Sende- und Empfangseinrichtung (32) aufweist, mit der elektromagnetische Prüfsignale (46) gesendet werden können und elektromagnetische Antwortsignale (48) empfangen werden können, und in Ist-Zustandsgrößen umgewandelt werden können, welche einen Ist-Funktionszustand des zu prüfenden wenigstens einen Gehäuseabschnitts (22) charakterisieren,
wobei die wenigstens eine Gehäuse-Prüfeinrichtung (30) wenigstens ein Vergleichsmittel (50) aufweist, mit dem wenigstens eine Ist-Zustandsgröße und wenigstens eine vorgegebene Referenz-Zustandsgröße, welche einen vorgegebenen Referenz-Funktionszustand des wenigstens einen zu prüfenden Gehäuseabschnitts (22) charakterisiert, verglichen werden können und abhängig von dem Ergebnis des Vergleichs wenigstens ein entsprechendes Zustandssignal erzeugt werden kann,
**dadurch gekennzeichnet, dass** die wenigstens eine Gehäuse-Prüfeinrichtung (30) wenigstens eine Prüf-Antworteinrichtung (34; 134) aufweist, die an dem wenigstens einem zu prüfenden Gehäuseabschnitt (22) angeordnet ist,
wobei durch die Prüf-Sende- und Empfangseinrichtung (32) elektromagnetische Prüfsignale (46) zu der wenigstens einen Prüf-Antworteinrichtung (34; 134) gesendet werden können und elektromagnetische Antwortsignale (48), welche als Antwort auf elektromagnetische Prüfsignale (46) von der wenigstens einen Prüf-Antworteinrichtung (34; 134) ausgehen, empfangen werden können,
wobei die wenigstens eine Prüf-Antworteinrichtung (34; 134) wenigstens eine Antennenstruktur (34) aufweist oder daraus besteht, die direkt an dem zu prüfenden Gehäuseabschnitt (22) angeordnet und mit diesem verbunden ist, so dass sich Veränderungen des Funktionszustandes des zu prüfenden Gehäuseabschnitts (22) auf die Antworteigenschaften der Antennenstruktur (34) auswirken.

2. Detektionsvorrichtung nach Anspruch 1, **dadurch gekennzeichnet, dass** wenigstens eine Prüf-Sende- und Empfangseinrichtung (32) und/oder wenigstens eine Prüf-Antworteinrichtung (34; 134) zur Aussendung und/oder zum Empfang von elektromagnetischen Kurzwellen-Signalen ausgestaltet ist.

3. Detektionsvorrichtung nach einem der vorigen Ansprüche, **dadurch gekennzeichnet, dass** mehrere Prüf-Antworteinrichtungen (34; 134) entlang des wenigstens einen Gehäuseabschnitts (22) verteilt angeordnet sind und/oder wenigstens eine Prüf-Antworteinrichtung (34) sich entlang wenigstens eines Teils des wenigstens einen zu prüfenden Gehäuseabschnitts (22) erstreckt.

4. Detektionsvorrichtung nach einem der vorigen Ansprüche, **dadurch gekennzeichnet, dass** wenigstens eine Prüf-Antworteinrichtung (134) wenigstens ein elektrisches Bauteil aufweist, mit dem auf elektromagnetische Prüfsignale (46) hin elektromagnetische Antwortsignale (48) generiert werden können..

5. Detektionsvorrichtung nach Anspruch 4, **dadurch gekennzeichnet, dass** wenigstens ein elektrisches Bauteil ein passives Bauteil ist und/oder wenigstens ein elektrisches Bauteil ein aktives Bauteil ist.

6. Detektionsvorrichtung nach einem der vorigen Ansprüche, **dadurch gekennzeichnet, dass** wenigstens eine Prüf-Antworteinrichtung (34; 134) wenigstens teilweise in dem wenigstens einen zu prüfenden Gehäuseabschnitt (22) und/oder an einer Oberfläche des wenigstens einen zu prüfenden Gehäuseabschnitts (22) angeordnet ist und/oder wenigstens eine Prüf-Antworteinrichtung (34; 134) wenigstens teilweise mit dem wenigstens einen zu prüfenden Gehäuseabschnitt (22) verbunden ist.

7. Detektionsvorrichtung nach einem der vorigen Ansprüche, **dadurch gekennzeichnet, dass** wenigstens eine Prüf-Sende- und Empfangseinrichtung (32) in dem wenigstens einen Gehäuse (20) angeordnet ist.

8. Detektionsvorrichtung nach einem der vorigen Ansprüche, **dadurch kennzeichnet, dass** wenigstens eine Sendefrequenz für elektromagnetische Prüfsignale (46) der wenigstens einen Prüf-Sende- und Empfangseinrichtung (32) und eine Resonanzfrequenz für elektromagnetische Prüfsignale (46) der Prüf-Antworteinrichtung (34; 134) aneinander angepasst sind.

9. Detektionsvorrichtung nach einem der vorigen Ansprüche, **dadurch gekennzeichnet, dass** wenigstens eine Detektions-Sendeeinrichtung (24) zur Aussendung von elektromagnetischen Detektionssignalen (38, 40) ausgestaltet ist
und/oder
sich die Frequenzbereiche der elektromagnetischen Detektionssignale (38, 40) und der elektromagnetischen Prüfsignale (46) nicht überlappen
und/oder
die Detektionsvorrichtung (12) wenigstens eine Detektions-Empfangseinrichtung (26) aufweist.

10. Detektionsvorrichtung (12) nach einem der vorigen Ansprüche, **dadurch gekennzeichnet, dass** wenigstens eine Prüf-Antworteinrichtung (34; 134) an wenigstens einem Transmissions-Gehäuseabschnitt (22) angeordnet ist.

11. Fahrzeug (10) mit wenigstens einer Detektionsvorrichtung (12) gemäß Anspruch 1.

12. Verfahren zum Betreiben einer Gehäuse-Prüfeinrichtung (30) einer Detektionsvorrichtung (12), welche zur Überwachung wenigstens eines Überwachungsbereichs (14) mittels Detektionssignalen (38, 40) vorgesehen ist, bei dem mittels wenigstens einer Gehäuse-Prüfeinrichtung (30) der Detektionsvorrichtung (12) ein Funktionszustand wenigstens eines Gehäuseabschnitts (22) wenigstens eines Gehäuses (20) der Detektionsvorrichtung (12) geprüft wird und bei Erkennen eines von einem Referenz-Funktionszustand des Gehäuseabschnitts (22) abweichenden Ist-Funktionszustand wenigstens ein Zustandssignal erzeugt wird,
wobei mit wenigstens einer Prüf-Sende- und Empfangseinrichtung (32) elektromagnetische Prüfsignale (46) gesendet werden,
und mit der wenigstens einen Prüf-Sende- und Empfangseinrichtung (32) elektromagnetische Antwortsignale (48) empfangen werden und in Ist-Zustandsgrößen umgewandelt werden, welche einen Ist-Funktionszustand des zu prüfenden wenigstens einen Gehäuseabschnitts (22) charakterisieren,
mit wenigstens einem Vergleichsmittel (50) wenigstens eine Ist-Zustandsgröße und wenigstens eine vorgegebene Referenz-Zustandsgröße, welche einen vorgegebenen Referenz-Funktionszustand wenigstens eines zu prüfenden Gehäuseabschnitts (22) charakterisiert, verglichen wird und abhängig von dem Ergebnis des Vergleichs wenigstens ein entsprechendes Zustandssignal erzeugt wird,
**dadurch gekennzeichnet, dass**
mit der wenigstens einer Prüf-Sende- und Empfangseinrichtung (32) elektromagnetische Prüfsignale (46) zu wenigstens einer Prüf-Antworteinrichtung (34; 134), die an wenigstens einem zu prüfenden Gehäuseabschnitt (22) angeordnet ist, gesendet werden,
und mit der wenigstens einen Prüf-Antworteinrichtung (34; 134) elektromagnetische Antwortsignale (48) als Antwort auf elektromagnetische Prüfsignale (46) ausgegeben werden,
wobei die wenigstens eine Prüf-Antworteinrichtung (34; 134) wenigstens eine Antennenstruktur (34) aufweist oder daraus besteht, die direkt an dem zu prüfenden Gehäuseabschnitt (22) angeordnet und mit diesem verbunden ist, so dass sich Veränderungen des Funktionszustandes des zu prüfenden Gehäuseabschnitts (22) auf die Antworteigenschaften der Antennenstruktur (34) auswirken.

## Claims

1. Detection device (12) for monitoring at least one monitoring area (14) by means of detection signals (38, 40), having at least one housing (20) in which at least one detection transmitting device (24) for transmitting detection signals (38, 40) is arranged,
wherein the at least one housing (20) has at least one transmission housing portion (22) for transmitting detection signals (38, 40),
wherein the detection device (12) has at least one housing test device (30) that can be used to test a functional state of at least one housing portion (22) of the at least one housing (20) and to generate at least one state signal when an actual functional state that is different from a reference functional state of the housing portion (22) is identified,
wherein the at least one housing test device (30) has at least one test transmitting and receiving device (32) that can be used to transmit electromagnetic test signals (46) and to receive electromagnetic response signals (48) and convert them into actual state variables that characterize an actual functional state of the at least one housing portion (22) to be tested,
wherein the at least one housing test device (30) has at least one comparison means (50) that can be used to compare at least one actual state variable and at least one predefined reference state variable, which characterizes a predefined reference functional state of the at least one housing portion (22) to be tested, and to take the result of the comparison as a basis for generating at least one corresponding state signal,
**characterized in that** the at least one housing test device (30) has at least one test response device (34; 134) that is arranged on the at least one housing portion (22) to be tested,
wherein the test transmitting and receiving device (32) can transmit electromagnetic test signals (46) to the at least one test response device (34; 134) and can receive electromagnetic response signals (48) that emanate from the at least one test response device (34; 134) as a response to electromagnetic test signals (46),
wherein the at least one test response device (34; 134) has, or consists of, at least one antenna structure (34) that is arranged directly on, and is connected to, the housing portion (22) to be tested, with the result that changes in the functional state of the housing portion (22) to be tested affect the response properties of the antenna structure (34).

2. Detection device according to Claim 1, **characterized in that** at least one test transmitting and receiving device (32) and/or at least one test response device (34; 134) is designed to send and/or receive electromagnetic short-wave signals.

3. Detection device according to either of the preceding claims, **characterized in that** multiple test response devices (34; 134) are arranged along the at least one housing portion (22) in a distributed manner and/or at least one test response device (34) extends along at least one part of the at least one housing portion (22) to be tested.

4. Detection device according to one of the preceding claims, **characterized in that** at least one test response device (134) has at least one electrical component that can be used to generate electromagnetic response signals (48) in response to electromagnetic test signals (46).

5. Detection device according to Claim 4, **characterized in that** at least one electrical component is a passive component and/or at least one electrical component is an active component.

6. Detection device according to one of the preceding claims, **characterized in that** at least part of at least one test response device (34; 134) is arranged in the at least one housing portion (22) to be tested and/or on a surface of the at least one housing portion (22) to be tested and/or at least part of at least one test response device (34; 134) is connected to the at least one housing portion (22) to be tested.

7. Detection device according to one of the preceding claims, **characterized in that** at least one test transmitting and receiving device (32) is arranged in the at least one housing (20).

8. Detection device according to one of the preceding claims, **characterized in that** at least one transmission frequency for electromagnetic test signals (46) of the at least one test transmitting and receiving device (32) and a resonant frequency for electromagnetic test signals (46) of the test response device (34; 134) are matched to each other.

9. Detection device according to one of the preceding claims, **characterized in that** at least one detection transmitting device (24) is designed to send electromagnetic detection signals (38, 40)
and/or
the frequency ranges of the electromagnetic detection signals (38, 40) and the electromagnetic test signals (46) do not overlap
and/or
the detection device (12) has at least one detection receiving device (26).

10. Detection device (12) according to one of the preceding claims, **characterized in that** at least one test response device (34; 134) is arranged on at least one transmission housing portion (22).

11. Vehicle (10) having at least one detection device (12) according to Claim 1.

12. Method for operating a housing test device (30) of a detection device (12) that is intended for monitoring at least one monitoring area (14) by means of detection signals (38, 40), in which at least one housing test device (30) of the detection device (12) is used to test a functional state of at least one housing portion (22) of at least one housing (20) of the detection device (12) and to generate at least one state signal when an actual functional state that is different from a reference functional state of the housing portion (22) is identified,
wherein at least one test transmitting and receiving device (32) is used to transmit electromagnetic test signals (46),
and the at least one test transmitting and receiving device (32) is used to receive electromagnetic response signals (48) and convert them into actual state variables that characterize an actual functional state of the at least one housing portion (22) to be tested,
at least one comparison means (50) is used to compare at least one actual state variable and at least one predefined reference state variable, which characterizes a predefined reference functional state of at least one housing portion (22) to be tested, and to take the result of the comparison as a basis for generating at least one corresponding state signal,
**characterized in that**
the at least one test transmitting and receiving device (32) is used to transmit electromagnetic test signals (46) to at least one test response device (34; 134) that is arranged on at least one housing portion (22) to be tested,
and the at least one test response device (34; 134) is used to output electromagnetic response signals (48) as a response to electromagnetic test signals (46),
wherein the at least one test response device (34; 134) has, or consists of, at least one antenna structure (34) that is arranged directly on, and is connected to, the housing portion (22) to be tested, with the result that changes in the functional state of the housing portion (22) to be tested affect the response properties of the antenna structure (34).

## Revendications

1. Dispositif de détection (12) pour la surveillance d'au moins une région de surveillance (14) au moyen de signaux de détection (38, 40), comprenant au moins un boîtier (20) dans lequel est disposé au moins un dispositif d'émission de détection (24) pour émettre des signaux de détection (38, 40),
dans lequel l'au moins un boîtier (20) comporte au moins une section de boîtier d'émission (22) pour l'émission de signaux de détection (38, 40),
dans lequel le dispositif de détection (12) comporte au moins un dispositif de test de boîtier (30) avec lequel un état fonctionnel d'au moins une section de boîtier (22) de l'au moins un boîtier (20) peut être testé et au moins un signal d'état peut être généré lors de la détection d'un état fonctionnel réel différent d'un état fonctionnel de référence de la section de boîtier (22), dans lequel l'au moins un dispositif de test de boîtier (30) comprend
au moins un dispositif d'émission et de réception de test (32) avec lequel des signaux de test électromagnétiques (46) peuvent être émis et des signaux de réponse électromagnétiques (48) peuvent être reçus, lesquels peuvent être convertis en variables d'état réelles caractérisant un état fonctionnel réel de l'au moins une section de boîtier (22) à tester,
dans lequel l'au moins un dispositif de test de boîtier (30) comprend au moins un moyen de comparaison (50) avec lequel au moins une grandeur d'état réelle et au moins une grandeur d'état de référence prédéfinie, qui caractérise un état fonctionnel de référence prédéfini de l'au moins une section de boîtier (22) à tester, peuvent être caractérisée et de générer au moins un signal d'état correspondant peut être généré en fonction du résultat de la comparaison,
**caractérisé en ce que** l'au moins un dispositif de test de boîtier (30) comprend au moins un dispositif de réponse de test (34 ; 134) disposé sur l'au moins une section de boîtier (22) à tester,
dans lequel le dispositif d'émission et de réception de test (32) peut émettre des signaux de test électromagnétiques (46) vers l'au moins un dispositif de réponse de test (34 ; 134) et recevoir des signaux de réponse électromagnétiques (48) émis par l'au moins un dispositif de réponse de test (34 ; 134) en réponse aux signaux de test électromagnétiques (46),
dans lequel l'au moins un dispositif de réponse de test (34 ; 134) comprend au moins une structure d'antenne (34) ou est constitué de celle-ci, laquelle est directement disposée sur la section de boîtier (22) à tester et reliée à celle-ci, de telle sorte que des modifications de l'état fonctionnel de la section de boîtier (22) à tester affectent les propriétés de réponse de la structure d'antenne (34).

2. Dispositif de détection selon la revendication 1, **caractérisé en ce qu'**au moins un dispositif d'émission et de réception de test (32) et/ou au moins un dispositif de réponse de test (34 ; 134) est conçu pour émettre et/ou recevoir des signaux électromagnétiques à ondes courtes.

3. Dispositif de détection selon l'une des revendications précédentes, **caractérisé en ce que** plusieurs dispositifs de réponse de test (34 ; 134) sont répartis le long de l'au moins une section de boîtier (22) et/ou **en ce qu'**au moins un dispositif de réponse de test (34) s'étend le long d'au moins une partie de l'au moins une section de boîtier (22) à tester.

4. Dispositif de détection selon l'une des revendications précédentes, **caractérisé en ce qu'**au moins un dispositif de réponse de test (134) comporte au moins un composant électrique avec lequel des signaux de réponse électromagnétiques (48) peuvent être générés en réponse à des signaux de test électromagnétiques (46).

5. Dispositif de détection selon la revendication 4, **caractérisé en ce qu'**au moins un composant électrique est un composant passif et/ou au moins un composant électrique est un composant actif.

6. Dispositif de détection selon l'une des revendications précédentes, **caractérisé en ce qu'**au moins un dispositif de réponse de test (34 ; 134) est disposé au moins partiellement dans l'au moins une section de boîtier (22) à tester et/ou sur une surface de l'au moins une section de boîtier (22) à tester et/ou **en ce qu'**au moins un dispositif de réponse de test (34 ; 134) est au moins partiellement relié à l'au moins une section de boîtier (22) à tester.

7. Dispositif de détection selon l'une des revendications précédentes, **caractérisé en ce qu'**au moins un dispositif d'émission et de réception de test (32) est disposé dans l'au moins un boîtier (20).

8. Dispositif de détection selon l'une des revendications précédentes, **caractérisé en ce qu'**au moins une fréquence d'émission des signaux de test électromagnétiques (46) de l'au moins un dispositif d'émission et de réception de test (32) et une fréquence de résonance des signaux de test électromagnétiques (46) du dispositif de réponse de test (34 ; 134) sont adaptées l'une à l'autre.

9. Dispositif de détection selon l'une des revendications précédentes, **caractérisé en ce qu'**au moins un dispositif d'émission de détection (24) est conçu pour émettre des signaux de détection électromagnétiques (38, 40)
et/ou
les plages de fréquences des signaux de détection électromagnétiques (38, 40) et des signaux de test électromagnétiques (46) ne se chevauchent pas
et/ou
le dispositif de détection (12) comprend au moins un dispositif de réception de détection (26).

10. Dispositif de détection (12) selon l'une des revendications précédentes, **caractérisé en ce qu'**au moins un dispositif de réponse de test (34 ; 134) est disposé sur au moins une section de boîtier d'émission (22).

11. Véhicule (10) comprenant au moins un dispositif de détection (12) selon la revendication **1.**

12. Procédé de fonctionnement d'un dispositif de test de boîtier (30) d'un dispositif de détection (12), prévu pour la surveillance d'au moins une région de surveillance (14) au moyen de signaux de détection (38, 40), dans lequel un état fonctionnel d'au moins une section de boîtier (22) d'au moins un boîtier (20) du dispositif de détection (12) est testé au moyen d'au moins un dispositif de test de boîtier (30) du dispositif de détection (12), et au moins un signal d'état est généré lors de la détection d'un état fonctionnel réel différent d'un état fonctionnel de référence de la section de boîtier (22),
dans lequel des signaux de test électromagnétiques (46) sont émis par au moins un dispositif d'émission et de réception de test (32),
et des signaux de réponse électromagnétiques (48) sont reçus par l'au moins un dispositif d'émission et de réception de test (32) et convertis en variables d'état réelles caractérisant un état fonctionnel réel de l'au moins une section de boîtier (22) à tester,
au moins une grandeur d'état réelle et au moins une grandeur d'état de référence prédéfinie, qui caractérise un état fonctionnel de référence prédéfini d'au moins une section de boîtier (22) à tester, sont comparées à l'aide d'au moins un moyen de comparaison (50) et, en fonction du résultat de la comparaison, au moins un signal d'état correspondant est généré,
**caractérisé en ce que**
des signaux de test électromagnétiques (46) sont émis par l'au moins un dispositif d'émission et de réception de test (32) vers au moins un dispositif de réponse de test (34 ; 134) disposé sur au moins une section de boîtier (22) à tester,
et des signaux de réponse électromagnétiques (48) sont délivrés par l'au moins un dispositif de réponse de test (34 ; 134) en réponse aux signaux de test électromagnétiques (46),
dans lequel l'au moins un dispositif de réponse de test (34 ; 134) comprend au moins une structure d'antenne (34) ou est constitué de celle-ci, laquelle est directement disposée sur la section de boîtier (22) à tester et reliée à celle-ci, de telle sorte que des modifications de l'état fonctionnel de la section de boîtier (22) à tester affectent les propriétés de réponse de la structure d'antenne (34).
